# EUROPÄISCHE PATENTANMELDUNG

(11) **EP 3 121 486 A2**
(43) Veröffentlichungstag der Anmeldung: **25.01.2017**
(21) Anmeldenummer: 16181097.3
(22) Anmeldetag: 25.07.2016
(51) Int. Cl.: F16H 57/023, F16H 49/00

(54) **SPANNUNGSWELLENGETRIEBE UND VERFAHREN ZUM HERSTELLEN EINES SPANNUNGSWELLENGETRIEBES**

(30) Priorität: 23.07.2015 DE 102015112032
(71) Anmelder: Ovalo GmbH, 65555 Limburg (DE)
(72) Erfinder:
(74) Vertreter: Grabovac, Dalibor

(57) **Zusammenfassung**

Die Erfindung betrifft ein Verfahren zum Herstellen eines Spannungswellengetriebes und ein Spannungswellengetriebe insbesondere für ein aktives Fahrwerk eines Kraftfahrzeuges. Das Verfahren ist gekennzeichnet durch ein Einpressen eines innenverzahnten Hohlrades in axialer Richtung in ein Getriebegehäuse, derart, dass das innenverzahnte Hohlrad drehfest in dem Getriebegehäuse gehalten ist, und durch ein Einbauen eines Wellengenerators und eines außenverzahnten Flexsplines derart, dass die Innenverzahnung des Hohlrades mit der Außenverzahnung des Flexsplines in Eingriff steht.

## Beschreibung

Die Erfindung betrifft ein Verfahren zum Herstellen eines Spannungswellengetriebes.

Die Erfindung betrifft außerdem ein Spannungswellengetriebe mit einem Wellengenerator, einem außenverzahnten Flexspline und einem innenverzahnten Hohlrad, dessen Innenverzahnung mit der Außenverzahnung des Flexsplines in Eingriff steht, und mit einem Getriebegehäuse.

Die Erfindung betrifft außerdem einen Aktuator, insbesondere Fahrwerksaktuator, sowie eine Tragstruktur mit einem solchen Getriebe oder Aktuator.

Die Erfindung betrifft darüber hinaus ein Fahrwerk und ein Kraftfahrzeug mit einem solchen Getriebe oder Aktuator.

Getriebe der eingangs genannten Art werden oftmals zur Herstellung aktiver Stabilisierungssysteme, insbesondere zur Verbesserung des Seitneigungs- und Wankverhaltens bei Kurvenfahrten und/oder zum Vermeiden oder Reduzieren von Nickbewegungen beim Anfahren oder Bremsen, sind in unterschiedlichsten Ausführungsformen verwendet.

Beispielsweise gibt es Systeme, bei denen zwischen den Stabilisatorstangenhälften eines geteilten Stabilisators ein aktiv geregelter Aktuator angeordnet ist, der je nach Fahrsituation die Stabilisatorstangen-Hälften gegeneinander verdreht, um einer Seitneigung des Fahrzeuges entgegen zu wirken.

Aus DE 10 2005 031 036 A1 ist ein Schwenkmotor zur Wankregelung durch gegeneinander Verdrehen von zwei Kraftfahrzeugstabilisatoren bekannt. Der Schwenkmotor besteht mindestens aus einem Verstellantrieb mit einem Elektromotor, einem Schwenkmotorgetriebe und einem Gehäuse. Der Schwenkmotor ist zwischen den Kraftfahrzeugstabilisatoren, die auch als Hälften eines Gesamtstabilisators angesehen werden können, angeordnet und dazu bestimmt, aufgrund einer geeigneten Ansteuerung, diese Stabilisatorhälften bedarfsgerecht gegeneinander zu verdrehen.

Aus DE 10 2006 040 109 A1 ist ein aktiver, geteilter Kraftfahrzeugstabilisator mit eingebautem Schwenkmotor bekannt. Der Kraftfahrzeugstabilisator dient zur Wankregelung und weist einen Verstellantrieb mit einem Motor, einem Getriebe und mit einem Gehäuse auf. An einem Gehäuseteil ist ein Sensor zur Erfassung des Torsionwinkels des Stabilisatorteils angebracht, dessen Geber am Stabilisatorteil fixiert ist oder umgekehrt.

Aus DE 10 2008 048 950 A1 ist ein druckmittelbetätigbarer Schwenkmotor für ein Fahrzeug bekannt, der in einem geteilten Stabilisator angeordnet ist und mit dem die beiden Stabilisatorhälften zum Ausgleich von Fahrzeugbewegungen zueinander schwenkbar sind. Der Schwenkmotor weist einen in einem Gehäuse axial verschiebbaren Kolben und beidseitig zum Kolben angeordnete Arbeitsräume auf. Durch Druckmittelbeaufschlagung der Arbeitsräume in Verbindung mit einem oder mehreren Koppelelementen ist ein Drehmoment zwischen den Stabilisatorhälften erzeugbar. Zwischen den Arbeitsräumen besteht eine Verbindung, die mittels eines Ventils in Abhängigkeit von dem Fahrzustand des Fahrzeugs schließbar oder freigebbar ist.

Aus DE 10 2009 013 053 A1 ist ein Stabilisator für ein Fahrwerk eines Kraftfahrzeuges mit zumindest zwei Stabilisatorelementen bekannt, welche mittels zumindest eines elektromotorischen Aktuators zur Wankregelung verdrehbar sind und welche jeweils über zumindest eine Koppelstange mit dem Fahrwerk verbunden sind. Der Stabilisator ist mittels zumindest einer hydraulischen Freischalteinrichtung entkoppelbar.

Aus EP 2 011 674 A1 ist eine Stabilisatoranordnung, umfassend einen zweigeteilten Stabilisator, dessen Stabilisatorabschnitte eine rotatorische Relativbewegung zueinander ausführen und bei einer gegensinnigen Verdrehbelastung eine Rückstellkraft ausüben, bekannt. Die Rückstellkraft ist mittels eines Aktuators in Verbindung mit einem Getriebe einstellbar, wobei die Stabilisatoranordnung unabhängig von einer Torsionsfederwirkung der Stabilisatorabschnitte mindestens eine weitere Feder aufweist, die eine Torsionsfederwirkung bewirkt.

Eine ähnliche Vorrichtung ist aus DE 10 2009 006 385 A1 bekannt. Konkret offenbart diese Druckschrift einen Schwenkmotor für einen aktiven Wankstabilisator, der mit seinem Antrieb an eine Stabilisatorhälfte und der statorseitig an eine andere Stabilisatorhälfte eines geteilten Stabilisators angeschlossen werden kann.

Aus DE 10 2008 010 131 A1 ist ein Wankstabilisator für ein Kraftfahrzeug mit einem ersten und einem zweiten Stabilisatorteil, welche jeweils einem Rad einer gemeinsamen Fahrzeugquerachse des Kraftfahrzeugs zuordenbar und/oder zugeordnet sind, bekannt. Der Wankstabilisator weist ein Gehäuse auf, welches für eine kraftfahrzeugfeste Montage ausgebildet ist und in dem die zwei Stabilisatorteile zur Durchführung von gleichsinnigen und gegensinnigen Schwenkbewegungen gelagert sind. Außerdem ist eine Aktuatorvorrichtung vorgesehen, welche einen Elektromotor und ein Übertragungsgetriebe umfasst, wobei der Elektromotor zur Erzeugung eines Drehmoments und das Übertragungsgetriebe zur Weiterführung des Drehmoments an die Stabilisatorteile ausgebildet und/oder angeordnet sind, und wobei der Elektromotor von der

Schwenkbewegung der Stabilisatorteile entkoppelt gelagert ist.

Aus DE 102 22 696 A1 sind ein Lager mit geringem Gewicht und eine Wellengetriebeanordnung bekannt. Ein äußerer oder ein innerer Lagerring des Lagers weist Fixieröffnungen auf, um eine Anbringung des Rings an einem anderen Element zu ermöglichen. Die Teile des Lagers, an denen Laufringflächen ausgebildet sind, sind aus einem Material auf Eisenbasis hergestellt, während das Lagerring-Hauptelement aus einem leichten Material hergestellt ist, das leichter ist als das Material auf Eisenbasis. Oberflächenbereiche, die Sitzeinrichtungen für Fixierbolzen bilden, sind plattiert, um die Festigkeit dieser Bereiche zu erhöhen. Die Wellengetriebevorrichtung beinhaltet ein starres Innenzahnrad, ein flexibles Außenzahnrad, das im Inneren des Innenzahnrads angeordnet ist, sowie einen Wellengenerator, der im Inneren des Außenzahnrads angeordnet ist. Das Innenzahnrad und das Außenzahnrad sind durch das Lager mit geringem Gewicht derart gekoppelt, dass eine Rotationsbewegung der Zahnräder relativ zueinander ermöglicht ist.

Aus DE 102 15 569 A1 ist ein Verfahren zum Herstellen eines starren innenverzahnten Zahnrades eines Wellgetriebes bekannt. Ein starres Innenzahnrad der Wellengetriebevorrichtung wird durch Vereinigen eines eine Verzahnung bildenden Rings, der mit einer Innenverzahnung ausgebildet wird, sowie eines Zahnrad-Hauptrings zu einem einzigen Körper gebildet. Der die Verzahnung bildende Ring wird aus einem Eisen- oder Kupfermaterial mit höherer Festigkeit und Abriebsbeständigkeit hergestellt, während der Zahnrad-Hauptring aus einem leichten Material, wie z. B. einer Aluminiumlegierung, hergestellt wird. Die Außenumfangsfläche des die Verzahnung bildenden Rings wird aluminisiert, um eine Beschichtung mit dispergiertem Aluminium zu bilden, bevor ein Fließformgebungsvorgang mit dem die Verzahnung bildenden Ring in dem Zahnrad-Hauptring durchgeführt wird, um durch den Zahnrad-Hauptring und den die Verzahnung bildenden Ring miteinander zu vereinigen.

Es ist daher die Aufgabe der vorliegenden Erfindung, ein Verfahren anzugeben, das die Herstellung eines kompakten Spannungswellengetriebes, das dennoch hohe Drehmomente übertragen kann, ermöglicht.

Die Aufgabe wird durch ein Verfahren gelöst, das durch folgende Schritte gekennzeichnet ist:
a. Einpressen eines innenverzahnten Hohlrades in axialer Richtung in ein Getriebegehäuse, derart, dass das innenverzahnte Hohlrad in einem Aufnahmebereich für das Hohlrad drehfest in dem Getriebegehäuse gehalten ist, wobei in einer Querschnittsebene durch den Aufnahmebereich die radiale Abmessung der Getriebegehäusewandung kleiner ist, als die Kranzhöhe des Hohlrades.
b. Einbauen eines Wellengenerators und eines außenverzahnten Flexsplines derart, dass die Innenverzahnung des Hohlrades mit der Außenverzahnung des Flexsplines in Eingriff steht.

Es ist eine weitere Aufgabe der vorliegenden Erfindung, ein Spannungswellengetriebe anzugeben, das bauraumsparend ausgebildet werden kann und das dennoch hohe Drehmomente übertragen kann.

Diese Aufgabe wird durch ein Spannungswellengetriebe der eingangs genannten Art gelöst, das dadurch gekennzeichnet ist, dass das innenverzahnte Hohlrad in einem Aufnahmebereich für das Hohlrad in das Getriebegehäuse eingepresst und dadurch relativ zum Getriebegehäuse drehfest gehalten ist, wobei in einer Querschnittsebene durch den Aufnahmebereich die radiale Abmessung der Getriebegehäusewandung kleiner ist, als die Kranzhöhe des Hohlrades.

Die Erfindung hat den ganz besonderen Vorteil, dass sowohl das Getriebegehäuse, als auch das Hohlrad, das beispielsweise ein Circularspline oder ein Flexspline sein kann, sehr dünnwandig ausgeführt werden können. Dies insbesondere, weil weder das Hohlrad, noch das Getriebegehäuse zusätzliche Vorsprünge, Flansche, Verbindungselemente oder Ähnliches aufzuweisen braucht, um das Hohlrad drehfest in dem Getriebegehäuse, beispielsweise durch Festschrauben oder durch Verschweißen, befestigen zu können.

Vorzugsweise ist das innenverzahnte Hohlrad bezogen auf seine Rotationsmittelsymmetrieachse drehfest in dem Getriebegehäuse gehalten.

Dadurch, dass sowohl das Hohlrad, als auch das Getriebegehäuse sehr dünnwandig ausgeführt werden können, steht besonders viel Bauraum zu Verfügung, um die Innenverzahnung des Hohlrades mit einem großen Teilkreisdurchmesser versehen zu können. Dies insbesondere deshalb, weil die Wandung des Hohlrades und die Wandung des Getriebegehäuses, in das das Hohlrad eingepresst ist, in radialer Richtung wenig Bauraum beanspruchen, so dass das Hohlrad vorteilhafter Weise einen großen Innendurchmesser aufweisen kann. Ein großer Teilkreisdurchmesser der Innenverzahnung ist von besonderem Vorteil, weil ein große Belastbarkeit erreicht werden kann, um möglichst große Drehmomente über das Spannungswellengetriebe übertragen zu können.

Dadurch, dass in einer Querschnittsebene durch den Aufnahmebereich, die radiale Abmessung der Getriebegehäusewandung kleiner ist, als die Kranzhöhe des Hohlrades, wird vorteilhaft eine hinsichtlich der Außenabmessungen kompakte und bauraumsparende Bauform erreicht, wobei gleichzeitig dennoch im Vergleich zu herkömmlichen Spannungswellengetrieben gleicher äußerer Radialausdehnung große Drehmomente übertragen werden können.

Insbesondere kann vorteilhaft vorgesehen sein, dass der Quotient aus der radialen Abmessung der Getriebegehäusewandung und der Kranzhöhe des Hohlrades kleiner ist als 0,8, insbesondere kleiner ist als 0,5.

Unter der radialen Abmessung der Getriebegehäusewandung wird die Differenz von Innenradius zu Außenradius der Getriebegehäusewandung im Bereich der Querschnittsebene verstanden. Wenn die radiale Abmessung der Getriebegehäusewandung im Bereich der Aufnahme in axialer Richtung und/oder in tangentialer variiert, beispielsweise weil die Getriebegehäusewandung eine nach innen gerichtete Einpressverzahnung oder eine Abstufung aufweist, wird unter der radialen Abmessung der Getriebegehäusewandung der kleinste Radialabstand von der Innenoberfläche zur Außenoberfläche der Getriebegehäusewandung verstanden. Dies kann insbesondere der radiale Abstand vom Fußkreisdurchmesser der Einpressverzahnung zur Getriebegehäusewandung sein. Wenn die radiale Abmessung der Getriebegehäusewandung in Tangentialrichtung variiert, beispielsweise weil das Getriebegehäuse nach außen gerichtete Vorsprünge oder Befestigungsnasen aufweist und/oder weil das Getriebegehäuse keine rotationssymmetrische Außenkontur aufweist, wird unter der radialen Abmessung der Getriebegehäusewandung der kleinste Radialabstand von der Innenoberfläche zur Außenoberfläche der Getriebegehäusewandung verstanden, wobei jedoch vorzugsweise Ausnehmungen und/oder Freimachungen, wie beispielsweise radiale Bohrungen von geringem Durchmesser, unberücksichtigt bleiben, die das Getriebegehäuse nicht oder nur unwesentlich schwächen. Derartige Ausnehmungen und/oder Freimachungen können insbesondere solche sein, deren Durchmesser mehr als 10 mal, insbesondere mehr als 20 mal, kleiner ist, als der Innendurchmesser, insbesondere der mittlere Innendurchmesser, der Getriebegehäusewandung.

Unter der Kranzhöhe des Hohlrades wird die Differenz von Innenradius zu Außenradius des Hohlrades im Bereich der Querschnittsebene verstanden. Wenn die Kranzhöhe im Bereich der Aufnahme in axialer Richtung und/oder in tangentialer variiert, beispielsweise weil das Hohlrad eine nach außen gerichtete Einpressverzahnung oder eine Abstufung aufweist, wird unter der Kranzhöhe der kleinste Radialabstand von der Innenoberfläche zur Außenoberfläche des Hohlrades verstanden. Dies kann insbesondere der radiale Abstand vom Fußkreisdurchmesser der Einpressverzahnung zum Fußkreisdurchmesser der Außenverzahnung sein.

Vorzugsweise wird das Hohlrad ausschließlich durch den Einpressvorgang drehfest in dem Getriebegehäuse befestigt, ohne dass ein zusätzliches Befestigen des Hohlrades, beispielsweise durch Herstellen einer Stoffschlussverbindung, beispielweise durch Löten, Schweißen oder Kleben, oder einer zusätzlichen anderen Verbindung, wie beispielsweise durch Festschrauben, erfolgt. Insbesondere kann vorteilhaft vorgesehen sein, dass außer dem Einpressen kein zusätzliches, in tangentialer Richtung wirkendes Befestigen des Hohlrades in dem Getriebegehäuse erfolgt, und/oder dass außer dem Einpressen kein zusätzliches, hinsichtlich der Drehfestigkeit des innenverzahnten Hohlrades relativ zum Getriebegehäuse wirkendes Befestigen des Hohlrades in dem Getriebegehäuse erfolgt.

Das Getriebegehäuse ist vorzugsweise zumindest im Bereich einer Aufnahme für das Hohlrad zylindrisch ausgebildet. Alternativ ist es auch möglich, dass zumindest die Aufnahme des Getriebegehäuses für das Hohlrad konisch oder abgestuft ausgebildet ist. Vorzugsweise wird das Hohlrad in axialer Richtung in eine zylinderförmige Aufnahme des Getriebegehäuses eingepresst, wobei der Innendurchmesser des Getriebegehäuses im Bereich der Aufnahme kleiner ist, als ein Außendurchmesser des einzupressenden Hohlrades. Vorzugsweise weist das Getriebegehäuse einen Axialanschlag auf, bei dessen Erreichen der Einpressvorgang beendet wird.

Bei einer besonderen Ausführung ist die Außenumfangseite des einzupressenden Hohlrades derart ausgebildet, dass sich das einzupressende Hohlrad zu Beginn des Einpressvorgangs relativ zu der Aufnahme des Getriebegehäuses automatisch zentriert. Hierzu kann die Außenseite des Hohlrades, insbesondere ein erster umlaufende Vorsprung des Hohlrades, der in Einpressrichtung orientiert ist, konisch oder zylindrisch ausgebildet sein. Eine solche Ausführung erleichtert den Einpressvorgang. Darüber hinaus ist die Gefahr, dass das Hohlrad beim Einpressvorgang verkantet, zumindest verringert.

Bei einer ganz besonders vorteilhaften Ausführung weist die Außenumfangseite des Hohlrades wenigstens einen tangential umlaufenden Vorsprung auf. Insbesondere kann vorteilhaft vorgesehen sein, dass die Außenumfangseite des einzupressenden Hohlrades mehrere tangential umlaufende, axial voneinander beabstandete Vorsprünge aufweist. Die Vorsprünge können alle denselben Außendurchmesser aufweisen. Vorzugsweise weisen die tangential umlaufenden Vorsprünge jedoch unterschiedliche Außendurchmesser auf, wobei vorteilhaft insbesondere vorgesehen sein kann, dass die Außendurchmesser der umlaufenden Vorsprünge in Einpressrichtung abnehmen. Auf diese Weise ist eine abgestufte Konizität erreichbar, die den Einpressvorgang erleichtert und die es darüber hinaus erlaubt, mehrere Vorsprünge, insbesondere sämtliche Vorsprünge, wirksam mit einer in Einpressrichtung ausgerichteten Schneidkante zu versehen.

Bei einer vorteilhaften Ausführung weist wenigstens ein umlaufender Vorsprung eine in Einpressrichtung ausgerichtete Schneidkante auf. Die Schneidkante ist vorzugsweise derart ausgeführt, dass beim Einpressvorgang Material von der Innenseite des Getriebegehäuses abgeschält oder abgeschabt wird. Auf diese Weise wird ein besonders passgenauer Sitz des Hohlrades in dem Getriebegehäuse erreicht.

Je nach Material und Beschaffenheit des Getriebegehäuses kann der Spanwinkel positiv sein, um Material von der Innenseite des Getriebegehäuses spanend abzunehmen. Es kann jedoch auch vorgesehen sein, dass der Spanwinkel negativ ist, um ein Abschaben zu erreichen.

Bei einer besonderen Ausführung beträgt der Schneidwinkel der Schneidkante weniger als 90 Grad, was beispielsweise dadurch erreicht werden kann, dass die in Einpressrichtung ausgerichtete Stirnseite des Vorsprungs, beispielsweise bei einem Drehprozess, konisch ausgebildet wird. Beispielsweise kann bei der Herstellung des umlaufenden Vorsprungs eine Nut in die Außenumfangsfläche des Hohlrades gedreht werden, wobei die Vorschubrichtung beim Drehvorgang einen von Null Grad verschiedenen Winkel zur Radialrichtung aufweist.

Alternativ oder zusätzlich ist es auch möglich, dass die Außenumfangsfläche des Hohlrades konisch ausgebildet wird. Auch dies kann beispielsweise in einem Drehprozess oder durch Überfräsen des vorgedrehten Hohlrades erfolgen.

Wie bereits erwähnt, kann in vorteilhafter Weise vorgesehen sein, dass mehrere umlaufende Vorsprünge, insbesondere mehrere umlaufende Vorsprünge mit unterschiedlichem Außendurchmessen, jeweils eine in Einpressrichtung ausgerichtete Schneidkante aufweisen. Insbesondere kann vorteilhaft vorgesehen sein, dass die Schneidkanten, insbesondere auf Grund der unterschiedlichen Außendurchmesser der Vorsprünge, radial zu einander beabstandet sind. Bei einer solchen Ausführung erfolgt die Materialabtragung innerhalb des Getriebegehäuses beim Einpressvorgang stufenweise. Bei einer besonderen Ausführung weist die Außenumfangsfläche des einzupressenden Hohlrades mehrere umlaufende Vorsprünge mit in Einpressrichtung abnehmenden Außendurchmessern auf, wobei lediglich der Vorsprung mit dem größten Außendurchmesser eine in Einpressrichtung ausgerichtete Schneidkante aufweist. Eine solche Ausführung hat bewirkt, dass die Vorsprünge mit den geringeren Außendurchmessern das Hohlrad beim Einpressvorgang zunächst zentrieren, bevor eine Materialabtragung durch die Schneidkante des Vorsprungs mit dem größten Außendurchmesser erfolgt. Daher hat eine solche Ausführung den besonderen Vorteil, dass das Hohlrad besonders genau in dem Getriebegehäuse positioniert und befestigt wird.

Insbesondere um eine große Verdrehsicherheit des eingepressten Hohlrades relativ zu dem Getriebegehäuse zu erreichen, kann vorteilhaft vorgesehen sein, dass in wenigstens einen umlaufenden Vorsprung des einzupressenden Hohlrades axial verlaufende Kerben eingearbeitet sind. Der umlaufende Vorsprung besteht bei einer solchen Ausführung aus einer Vielzahl von Zähnen, die insbesondere eine Spitze oder eine axial verlaufende Scheitelkante aufweisen können. Es jedoch auch möglich, dass die Zähne umfangsseitig abgeflacht oder abgerundet sind.

Je nach Beschaffenheit des Getriebegehäuses und der zu erwartenden Belastung, kann die jeweils geeignete Zahnform gewählt werden. Beispielsweise haben spitze Zähne oder Zähne mit einer axial verlaufenden Scheitelkante den besonderen Vorteil, dass eine besonders hohe Verdrehsicherheit des Hohlrades relativ zu dem Getriebegehäuse erzielt wird. Zähne mit abgerundeten Zahnköpfen haben hingegen den besonderen Vorteileiner geringeren Kerbwirkung in dem Getriebegehäuse.

Die axial verlaufenden Kerben können im Radialquerschnitt eckig, insbesondere v-förmig oder topfförmig ausgebildet sein. Es ist jedoch auch möglich, dass die axial verlaufenden Kerben im Radialquerschnitt gerundet ausgebildet sind.

Die axial verlaufenden Kerben können insbesondere durch Fräsen oder durch Stoßen oder durch Wälzschälen hergestellt sein. Bei einer besonderen Ausführung werden zunächst die tangential umlaufenden Vorsprünge erzeugt und anschließend die axial verlaufenden Kerben eingearbeitet. Es jedoch auch möglich, dass umgekehrt vorgegangen wird.

Bei einer besonderen Ausführung sind das Hohlrad und die Aufnahme des Getriebegehäuses der Art dimensioniert, dass ausschließlich die auf der Außenumfangsfläche des Hohlrades vorhandenen Zähne in das Material des Getriebegehäuses einschneiden. Auf diese Weise wird eine drehsichere Befestigung des Hohlrades bei geringer Material Belastung des Getriebegehäuses erreicht. Insbesondere kann vorteilhaft vorgesehen sein, dass der Fußkreisdurchmesser der Verzahnung auf der Außenumfangsfläche des Hohlrades kleiner ist, als der Durchmesser der Aufnahme für das Hohlrad. Darüber hinaus kann vorteilhaft vorgesehen sein, dass der Kopf kreist Durchmesser der Verzahnung auf der Außenumfangsfläche des Hohlrades größer ist, als der Durchmesser der Aufnahme für das Hohlrad.

Bei einer besonderen Ausführung weist das Hohlrad eine radiale Wandstärke auf, die 4 bis 10 mal, insbesondere 5 bis 7 mal größer ist, als die Zahnhöhe seiner Innenverzahnung. Alternativ oder zusätzlich kann auch vorgesehen sein, dass das Hohlrad eine radiale Wandstärke aufweist, die im Bereich des 5- bis 20-fachen, insbesondere im Bereich des 8-bis 15-fachen, insbesondere im Bereich des 10- bis 12-fachen, der Zahnhöhe der Zähne der Außenumfangsfläche, insbesondere der Zähne eines umlaufenden Vorsprung der Außenumfangsfläche, liegt. Derartige Ausführungen sind besonders kompakt und bieten dennoch eine ausreichende Steifigkeit des Hohlrades.

Bei einer besonderen Ausführung weist ein umlaufender Vorsprung des einzupressenden Hohlrades eine Vielzahl von Zähnen auf, wobei jeder Zahn eine sich über die Zahnbreite verändernde Zahnhöhe aufweist. Beispielsweise kann vorgesehen sein, dass die Zahnhöhe über die Zahnbreite zunächst ansteigt und dann wieder abfällt. Es ist auch möglich, dass die Zahnhöhe, insbesondere in Einpressrichtung, über die Zahnbreite linear oder einer anderen Kurvenform folgend abnimmt. Eine solche Ausführung erleichtert den Einpressvorgang und ermöglicht ein besonders genaues Zentrieren und Positionieren des Hohlrades in dem Getriebegehäuse.

Alternativ oder zusätzlich ist es auch möglich, dass die einzelnen Zähne einen sich über die Zahnbreite verändernden Fußkreisdurchmesser aufweisen. Insbesondere kann vorteilhaft vorgesehen sein, dass der Fußkreisdurchmesser in Einpressrichtung abnimmt.

Bei einer besonderen Ausführung ist vorgesehen, dass die Außenumfangsfläche des einzupressenden Hohlrades mehrere umlaufende Vorsprünge mit in Einpressrichtung abnehmenden Außendurchmessern aufweist, wobei lediglich der Vorsprung mit dem größten Außendurchmesser eine Vielzahl von Zähnen, insbesondere spitzen Zähnen, aufweist. Bei dieser Ausführung wird das Hohlrad während des Einpressvorganges durch die Vorsprünge mit den kleineren Außendurchmessern zunächst koaxial zur Aufnahme des Getriebegehäuses zentriert. Bei Fortschreiten des Einpressvorganges wird insbesondere durch Einpressen des gezahnten Vorsprungs mit dem größten Außendurchmesser eine Verdrehsicherheit des Hohlrades relativ zu dem Getriebegehäuse hergestellt.

Bei einer besonderen Ausführung weist die Außenumfangsseite des einzupressenden Hohlrades wenigstens eine tangential umlaufende Nut auf. Die Nut kann insbesondere durch ein Drehverfahren hergestellt sein. Durch Eindrehen einer oder mehrerer Nuten können insbesondere die oben erwähnten umlaufenden Vorsprünge erzeugt werden. Hierbei kann insbesondere vorgesehen sein, dass eine Nut nicht rein in Radialrichtung eingedreht wird, sondern vielmehr zur Radialrichtung etwas verkippt, beispielsweise um an dem angrenzenden Vorsprung eine Schneidkante mit einem Schneidwinkel kleiner als 90 Grad zu erzeugen.

Dass einzupressende Hohlrad kann mehrere, insbesondere mehrere unterschiedlich breite, umlaufende Nuten aufweisen.

Bei einer ganz besonders vorteilhaften Ausführung ist die Nut derart ausgebildet und angeordnet, dass sie beim Einpressvorgang vom Getriebegehäuse abgetrennte Späne automatisch aufnimmt. Eine solche Ausführung hat den besonderen Vorteil, dass die abgetrennten Späne den Einpressvorgang und insbesondere die genaue Positionierung des Hohlrades innerhalb des Getriebegehäuses nicht behindern.

Bei einer besonderen Ausführung - und nach einem eigenständigen Erfindungsgedanken, der auch unabhängig davon, ob in einer Querschnittsebene durch den Aufnahmebereich die radiale Abmessung der Getriebegehäusewandung kleiner ist, als die Kranzhöhe des Hohlrades - wird vor dem Einpressen Klebstoff in eine in Tangentialrichtung umlaufende, dem Schneidvorsprung vorgelagerte Nut eingefüllt.

Der Klebstoff bildet nach dem Einpressvorgang eine zusätzliche Verbindung zwischen CS Ring und dem Getriebegehäuse. Dadurch, dass der Klebstoff in eine in Tangentialrichtung umlaufende, dem Schneidvorsprung vorgelagerte Nut eingefüllt wird, gibt es nicht lediglich eine dünne Klebstoffschicht. Vielmehr ist so eine relativ große Menge Klebstoff angehäuft, so dass dieser auch größere Dehnungen aufnehmen kann, wie sie beispielsweise bei Temperaturschwankungen auftreten können, wenn das innenverzahnte Hohlrad in ein Getriebebauteil eingepresst wird, das einen anderen, insbesondere auch größeren, Wärmeausdehnungskoeffizienten aufweist, als das Hohlrad. Auf diese Weise kann sichergestellt werden, dass dich das Hohlrad auch bei einer Temperaturveränderung, insbesondere bei einer Erwärmung, nicht aus dem Getriebebauteil löst.

Bei einer besonders vorteilhaften Ausführung ist die Nut derart ausgebildet und angeordnet, dass sie beim Einpressen mittels der Schneidkante vom Getriebebauteil abgetrennte Späne automatisch aufnimmt. Von besonderem Vorteil ist es bei einer solchen Ausführung, dass sich die bei einem Einpressvorgang mittels der Schneidkante von dem Getriebebauteil, das insbesondere ein Getriebegehäuse sein kann, abgetrennten Späne sich mit dem eingefüllten Klebstoff mischen, so dass der ausgehärtete Klebstoff im Ergebnis besonders gut stabilisiert ist.

Vorzugsweise kann der Klebstoff über den gesamten Umfang der Nut eingefüllt werden. Insbesondere kann vorteilhaft vorgesehen sein, dass die Nut vollständig mit Klebstoff aufgefüllt wird.

Der Klebstoff kann beim Einfüllen flüssig sein, was ein einfaches Einfüllen ermöglicht.

Der Klebstoff kann ein Einkomponenten-Klebstoff sein. Es ist alternativ auch möglich, dass der Klebstoff ein Zweikomponenten-Klebstoff ist. Insbesondere kann der Klebstoff Epoxidharz beinhalten.

Es kann insbesondere ein Klebstoff verwendet werden, der bei einer Temperatur im Bereich von 15 bis 25 Grad Celsius, insbesondere bei Raumtemperatur, aushärtet. Alternativ ist es auch möglich, dass der Klebstoff bei einer Temperatur über 25 Grad Celsius, insbesondere über Raumtemperatur, aushärtet und dass das Getriebebauteil nach dem Einpressen erwärmt wird. Insbesondere wenn ein Aushärten vermieden werden soll, kann vorteilhaft vorgesehen sein, dass der Klebstoff zum Aushärten mit UV-Licht beaufschlagt wird.

Nach einem alternativen, unabhängigen Erfindungsgedanken wird vor dem Einpressen auf die Außenseite des innenverzahnten Hohlrades ein reibungssteigerndes Material aufgetragen wird und dass das Hohlrad nach dem Einpressen relativ zu dem Getriebebauteil um die Axialrichtung gedreht wird.

Hierbei kann vorteilhaft insbesondere vorgesehen sein, dass die Innenseite der Aufnahme und die Außenseite des innenverzahnten Hohlrades kreiszylinderförmig ausgebildet sind. Vorzugsweise ist die Außenseite des innenverzahnten Hohlrades zahnfrei und/oder frei von tangential umlaufenden Vorsprüngen, insbesondere auch von Vorsprüngen in die Kerben eingearbeitet sind, ausgebildet. Insbesondere kann die Außenseite des innenverzahnten Hohlrades glatt ausgebildet sein. Insbesondere kann die Innenseite der Aufnahme und die Außenseite des Hohlrades eine Oberflächenrauheit im Bereich von 3,6 µm bis 25 µm aufweisen.

Vorzugsweise wird durch das Einpressen eine Presspassung erzeugt. Bevor das Hohlrad relativ zu dem Getriebebauteil, das insbesondere ein Getriebegehäuse sein kann, gedreht wird, gewährleistet die Presspassung bereits, dass ein bestimmtes Drehmoment von dem Hohlrad auf das Getriebebauteil übertragen werden kann. Durch das Drehen des Hohlrades relativ zu dem Getriebebauteil um einen vorbestimmten oder vorbestimmbaren Drehwinkel, der insbesondere im Bereich von 30 bis 360 Grad liegen kann, um die Axialrichtung, das dadurch bewirkt wird, dass ein Drehmoment aufgebracht wird, das größer ist, als das bestimmte Drehmoment, wird die Anbindung des reibungssteigernden Materials an das Hohlrad und an das Getriebebauteil erhöht, so dass im Ergebnis ein erhöhtes Drehmoment übertragen werden kann. Durch das Drehen des Hohlrades relativ zu dem Getriebebauteil wird insbesondere bewirkt, dass die Atome des reibungssteigernden Materials an das Hohlrad und/oder das Getriebebauteil durch Diffusion angenähert werden, wodurch eine Erhöhung des reibschlüssigen Anteils der Fügeverbindung entsteht.

Bei einer vorteilhaften Ausführung ist das Hohlrad derart ausgebildet und wird derart innerhalb des Getriebegehäuses positioniert, dass es als Axialsicherung und/oder als Abstützung für ein Lager, insbesondere ein Wälzlager des Spannungswellengetriebes und/oder für ein Lagerschild fungiert. Beispielsweise kann vorgesehen sei, dass das Hohlrad einen radial nach innen gerichteten Vorsprung aufweist, der als Axialsicherung für ein Wellengeneratorlager dient. Das Wellengeneratorlager ist vorzugsweise ein radial flexibles Lager, mittels dem der Antriebskern des Wellengenerators drehbar in dem radial flexiblen Flexspline gelagert ist. Alternativ oder zusätzlich kann auch vorgesehen sein, dass das Hohlrad als Abstützung für ein Wölzlager zum drehbaren Lagern des Wellengenerators innerhalb des Getriebegehäuses dient und/oder einen Lagerschild für ein Wälzlager zum drehbaren Lagern des Wellengenerators innerhalb des Getriebegehäuses aufweist.

Es kann auch vorgesehen sein, dass das Hohlrad derart ausgebildet und angeordnet wird, dass es als Abstützung für einen Lagerschild fungiert. Insbesondere kann vorgesehen sein, dass ein Lagerschild, insbesondere axial, beim Einpressvorgang zwischen dem Getriebegehäuses und dem Hohlrad eingeklemmt und dadurch innerhalb des Getriebegehäuses befestigt wird.

Von besonderem Vorteil ist - nach einem eigenständigen Erfindungsgedanken, der insbesondere auch unabhängig davon umsetzbar ist, ob in einer Querschnittsebene durch den Aufnahmebereich die radiale Abmessung der Getriebegehäusewandung kleiner ist, als die Kranzhöhe des Hohlrades - ein innenverzahntes Hohlrad, das auf seiner Außenseite wenigstens einen in Tangentialrichtung umlaufenden Schneidvorsprung mit einer Schneidkante aufweist, die so ausgebildet ist, dass sie bei einem Einpressvorgang in das Getriebebauteil schneidet, und das wenigstens einen in Tangentialrichtung umlaufenden Klemmvorsprung aufweist, der keine Schneidkante aufweist und der axial von dem Schneidvorsprung beabstandet ist und der in Einpressrichtung dem Schneidvorsprung nachgelagert ist und der einen größeren Außendurchmesser aufweist, als der Schneidvorsprung.

Ein solches innenverzahntes Hohlrad hat den ganz besonderen Vorteil, dass es durch einen Einpressvorgang besonders sicher verankert werden kann. Dies insbesondere auch dann, wenn das innenverzahnte Hohlrad in ein Getriebebauteil eingepresst wird, das einen anderen, insbesondere auch größeren, Wärmeausdehnungskoeffizienten aufweist, als das Hohlrad.

Der in Tangentialrichtung umlaufende Klemmvorsprung, der dem Schneidvorsprung beabstandet ist und der in Einpressrichtung dem Schneidvorsprung nachgelagert ist und der einen größeren Außendurchmesser aufweist, als der Schneidvorsprung, kann eine höhere radial nach außen gerichtete Klemmkraft ausüben, als der Schneidvorsprung. Insbesondere kann vorteilhaft vorgesehen sein, dass das Übermaß des Klemmvorsprunges relativ zum Innendurchmesser der Aufnahme größer ist, als die auf Grund einer zu erwartenden Temperaturänderung sich ergebende Änderung der Differenz der Durchmesser von Aufnahme und Hohlrad. Auf diese Weise kann sichergestellt werden, dass dich das Hohlrad auch bei einer Temperaturveränderung, insbesondere bei einer Erwärmung, nicht aus dem Getriebebauteil löst.

Insbesondere kann vorteilhaft auch vorgesehen sein, dass der Schneidvorsprung am Ort der Schneidkante einen Durchmesser aufweist, der um einen Prozentwert aus dem Bereich von 0,001 % bis 0,1%, insbesondere der um 0,01% größer ist, als der Innendurchmesser der Aufnahme, und/oder dass der Klemmvorsprung einen Außendurchmesser aufweist, der um einen Prozentwert aus dem Bereich von 0,01 % bis 1%, insbesondere der um 0,1% größer ist, als der Innendurchmesser der Aufnahme. Es ist, alternativ oder zusätzlich vorteilhaft auch möglich, dass der Klemmvorsprung auf der dem Schneidvorsprung zugewandten Seite einen Außendurchmesser aufweist, der um einen Prozentwert aus dem Bereich von 0,01 % bis 1%, insbesondere der um 0,1% größer ist, als der Innendurchmesser der Aufnahme.

Bei einer besonderen Ausführung weist der Schneidvorsprung am Ort der Schneidkante einen Durchmesser auf, der um ein Übermaß im Bereich von 0,01 mm bis 1 mm größer ist, als der Innendurchmesser der Aufnahme. Alternativ oder zusätzlich kann auch vorgesehen sein, dass der Klemmvorsprung am Ort der Schneidkante einen Durchmesser aufweist, der um ein Übermaß im Bereich von 0,1 mm bis 1 mm größer ist, als der Innendurchmesser der Aufnahme. Dies insbesondere, wenn das Hohlrad einen Durchmesser im Bereich von 100 mm bis 110 mm, insbesondere von 104 mm, aufweist.

Das Getriebebauteil, das insbesondere ein Getriebegehäuse oder ein Getriebering sein kann, ist vorzugsweise zumindest im Bereich einer Aufnahme für das Hohlrad zylindrisch, insbesondere kreiszylindrisch, ausgebildet. Alternativ ist es auch möglich, dass zumindest die Aufnahme des Getriebegehäuses für das Hohlrad konisch oder abgestuft ausgebildet ist.

Vorzugsweise wird das Hohlrad in axialer Richtung in eine zylinderförmige, insbesondere kreiszylinderförmige, Aufnahme des Getriebebauteils eingepresst. Das Getriebebauteil kann vorteilhaft einen Axialanschlag aufweisen, bei dessen Erreichen der Einpressvorgang beendet wird. Vorzugsweise ist das Hohlrad kreiszylinderförmig und/oder rotationssymmetrisch ausgebildet.

Bei einer besonderen Ausführung weist der Klemmvorsprung eine Anlaufschräge und/oder einen sich in Einpressrichtung abnehmenden Außendurchmesser auf. Auf diese Weise ist ein sicheres und relativ zur Aufnahme zentrisches Einpressen ermöglicht. Die Anlaufschräge kann zur Axialrichtung vorteilhaft einen Winkel im Bereich von 5 Grad bis 15 Grad aufweisen.

Bei einer besonders Ausführung, die besonders eine besonders drehfeste Verankerung des Hohlrades in einer Aufnahme erlaubt sind in den Schneidvorsprung und/oder in den Klemmvorsprung axial verlaufende Kerben eingearbeitet. Auf diese Weise können der Schneidvorsprung und/oder der Klemmvorsprung jeweils eine Vielzahl von Zähnen aufweisen. Eine solche Ausführung hat den besonderen Vorteil, dass Material des Getriebebauteils in die Kerben drängen kann, was die Drehfestigkeit besonders erhöht.

Es kann insbesondere vorteilhaft vorgesehen sein, dass der Schneidvorsprung eine Vielzahl von Zähnen aufweist, wobei jeder Zahn eine sich über die Zahnbreite verändernde Zahnhöhe aufweist, und/oder dass der Klemmvorsprung eine Vielzahl von Zähnen aufweist, wobei jeder Zahn eine sich über die Zahnbreite verändernde Zahnhöhe aufweist.

Bei einer besonders vorteilhaften Ausführung weist das Hohlrad stirnseitig und in Einpressrichtung dem Schneidvorsprung vorgelagert einen in Tangentialrichtung umlaufenden Einführvorsprung auf, der keine Schneidkante aufweist und dessen Außendurchmesser gleich groß oder kleiner als der Öffnungsdurchmesser der Aufnahme ist. Dies hat den besonderen Vorteil, dass sich das Hohlrad bereits zu Beginn des Einpressvorganges automatisch koaxial relativ zu der Aufnahme zentriert und während des Einpressvorganges zentriert bleibt. Insbesondere kann vorteilhaft vorgesehen sein, dass der Einführvorsprung eine Einführfase aufweist.

Auch in den Einführvorsprung axial verlaufende Kerben eingearbeitet sein. Es ist insbesondere vorteilhaft möglich, dass der Einführvorsprung eine Vielzahl von Zähnen aufweist, wobei jeder Zahn eine sich über die Zahnbreite verändernde Zahnhöhe aufweist.

Bei einer besonderen Ausführung ist zwischen in Einpressrichtung aufeinander folgenden Vorsprüngen jeweils eine Nut vorhanden. Insbesondere kann vorteilhaft vorgesehen sein, dass der Einführvorsprung und der Schneidvorsprung durch eine in Tangentialrichtung umlaufende Nut voneinander getrennt sind. Besonders vorteilhaft ist eine Ausführung, bei der dem Schneidvorsprung in Einpressrichtung eine Nut derart vorgelagert ist, dass sie beim Einpressen mittels der Schneidkante vom Getriebebauteil abgetrennte Späne automatisch aufnimmt.

Auch zwischen dem Schneidvorsprung und dem Klemmvorsprung kann vorteilhaft eine in Tangentialrichtung umlaufende Nut vorhanden sein.

Es kann vorkommen, dass die Innenverzahnung nach dem Einpressen durch die radialen Spannkräfte der Aufnahme radial so nach innen gedrückt wird, dass sich die Form und/oder die Abmessungen der Innenverzahnung verändern. Diesbezüglich kann vorteilhaft vorgesehen sein, dass dies bei der Herstellung des innenverzahnten Hohlrades berücksichtigt wird. Insbesondere können die Form und/oder die Abmessungen derart vorgehalten werden, dass sie nach dem Einpressen in die Aufnahme ein vorher festgelegtes Sollmaß und/oder eine vorher festgelegte Sollform aufweisen. Es ist auch möglich, dass Maß- oder Formabweichungen nach dem Einpressen korrigiert werden.

Die Erfindung hat den ganz besonderen Vorteil, dass das Getriebegehäuse und das Hohlrad aus verschiedenen Materialien, insbesondere aus Materialien mit unterschiedlichen mechanischen Eigenschaften, hergestellt sein können. Beispielsweise kann das Getriebegehäuse aus Leichtmetall, insbesondere aus Aluminium oder einer Aluminiumlegierung gefertigt sein, während das Hohlrad beispielsweise aus Stahl gefertigt wird. Eine derartige Kombination von Materialien hat den besonderen Vorteil, dass das Spannungswellengetriebe insgesamt besonders leicht ausgebildet werden kann, während gleichzeitig keinerlei Abstriche in Bezug auf die Dauerbelastbarkeit und Funktionsfähigkeit gemacht werden müssen.

Von besonderem Vorteil ist ein Aktuator, insbesondere ein Fahrwerksaktuator, der einen Antriebsmotor und ein erfindungsgemäßes Spannungswellengetriebe beinhaltet. Insbesondere kann vorteilhaft vorgesehen sein, dass der Antriebsmotor mittels eines Zugmitteltriebs an das Spannungswellengetriebe angekoppelt ist. Beispielsweise ist der Antriebsmotor bei einer besonderen Ausführung mittels eines Riementriebs an das Spannungswellengetriebe angekoppelt.

Von ganz besonderem Vorteil ist ein aktives Fahrwerk für ein Kraftfahrzeug, das einen solchen Aktuator und/oder ein erfindungsgemäßes Spannungswellengetriebe beinhaltet. Hierbei kann beispielsweise vorgesehen sein, dass mittels des Aktuators die beiden drehbar gelagerten Stabilisatorhälften einer Fahrzeugachse, insbesondere fahrsituationsabhängig, gegeneinander verdreht werden. Es kann alternativ auch vorgesehen sein, dass radselektiv für jedes Rad des Kraftfahrzeugs ein eigener Aktuator vorgesehen ist, so dass das Ein- und Ausfedern jedes einzelnen Rades unabhängig von den anderen Rädern einstellbar ist. Auf diese Weise kann vorteilhaft nicht nur ein Wankstabilisator, sondern auch ein Nickstabilisator realisiert sein. Insbesondere kann pro Fahrzeugachse genau ein solcher Aktuator vorgesehen sein.

Bei einer besonderen Ausführung ist das aktive Fahrwerk dahingehend gesteuert, dass die Fahrzeugkarosserie bei einer Kurvenfahrt um die Fahrzeuglängsachse geneigt wird, um die Wirkung der Fliehkräfte auf die Fahrzeugpassagiere zu verringern.

Von besonderem Vorteil ist eine Tragstruktur, in die wenigstens ein erfindungsgemäßes Spannungswellengetriebe beziehungsweise wenigstens ein Aktuator, wie er weiter oben beschrieben ist, eingebaut ist und/oder die ein erfindungsgemäßes Spannungswellengetriebe aufweist. Insbesondere kann es sich bei der Tragstruktur um eine Fahrzeugkomponente oder einen Teil einer Fahrzeugkomponente handeln. Von ganz besonderem Vorteil ist eine Ausführung, bei der die Tragstruktur als Teil eines, insbesondere aktiven, Fahrwerks ausgebildet ist. Insbesondere kann die Tragstruktur vorteilhaft als Teil einer Fahrzeugachse, nämlich insbesondere als Quertraverse, ausgebildet sein. Bei einer besonderen Ausführung weist die Tragstruktur eine Quertraverse, insbesondere eine Quertraverse eines Fahrwerks, auf, die das Getriebegehäuse oder wenigstens einen Teil des Getriebegehäuses bildet. Insbesondere kann vorteilhaft vorgesehen sein, dass die Quertraverse wenigstens im Aufnahmebereich für das Hohlrad einen Teil des Getriebegehäuses bildet. Insoweit kann eine solche Quertraverse vorteilhaft eine Mehrfachfunkton ausüben, nämlich einerseits ihrer originäre Funktion als Fahrwerksbauteil und andererseits als Gehäuse für ein Spannungswellengetriebe, wobei das Spannungswellengetriebe als Teil eines aktiven Fahrwerksaktuators vorteilhaft ebenfalls Teil des Fahrwerks sein kann.

Bei einer ganz besonders vorteilhaften Ausführung ist die Tragstruktur als kastenförmige Quertraverse einer Fahrzeugachse ausgebildet, wobei in dem von der Quertraverse umschlossenen Raum das erfindungsgemäße Spannungswellengetriebe und/oder der oben erwähnte Aktuator angeordnet sind. Darüber hinaus können in dem Hohlraum auch elektronische Bauteile zum Steuern und/oder Regeln des Aktuators angeordnet sein.

Bei einer solchen Ausführung sind das Spannungswellengetriebe und/oder der Aktuator und/oder die elektronischen Bauteile besonders gut gegen Verschmutzung und Beschädigung geschützt. Innerhalb der Tragstruktur können die Stabilisatorstäbe, insbesondere eines geteilten Stabilisators, zu dem Aktuator verlaufen und an diesen angekoppelt sein.

Von besonderem Vorteil ist auch ein Kraftfahrzeug, das ein erfindungsgemäßes Spannungswellengetriebe beziehungsweise ein Aktuator, wie er weiter oben beschrieben ist, oder ein aktives Fahrwerk mit einem solchen Spannungswellengetriebe aufweist.

Von besonderem Vorteil ist auch ein Roboter, das ein erfindungsgemäßes Spannungswellengetriebe oder einen Aktuator mit einem solchen Spannungswellengetriebe aufweist. Besonders vorteilhaft ist auch ein motorisiertes Gelenk zum Verbinden von zwei relativ zueinander beweglichen Trägern eines programmierbaren Bewegungsautomaten, das einen ein erfindungsgemäßes Spannungswellengetriebe und/oder einen Aktuator mit einem solchen Spannungswellengetriebe aufweist. Hierbei kann insbesondere vorteilhaft vorgesehen sein, dass ein Gehäuse des programmierbaren Bewegungsautomaten die Aufnahme für das innenverzahnte Hohlrad aufweist und/oder dass ein Gehäuse des programmierbaren Bewegungsautomaten das Getriebebauteil bildet, das die Aufnahme für das innenverzahnte Hohlrad aufweist.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind.

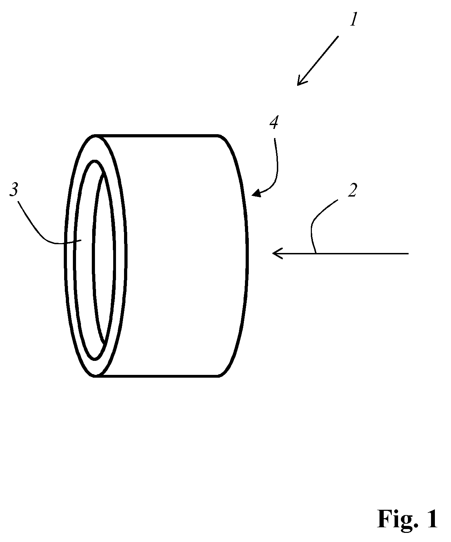

Figur 1 zeigt schematisch den Aufnahmeteil 1 eines Getriebegehäuses. Das Getriebegehäuse ist der besseren Übersichtlichkeit halber im Übrigen nicht dargestellt. Das in dieser Figur nicht dargestellte Hohlrad wird entlang eine Einpressrichtung 2 axial in das Aufnahmeteil 1 soweit eingepresst, bis es einen Axialanschlag 3 erreicht. Das Aufnahmeteil 1 und insbesondere der Aufnahmebereich 4, den es umschließt, sind zylindrisch ausgebildet.

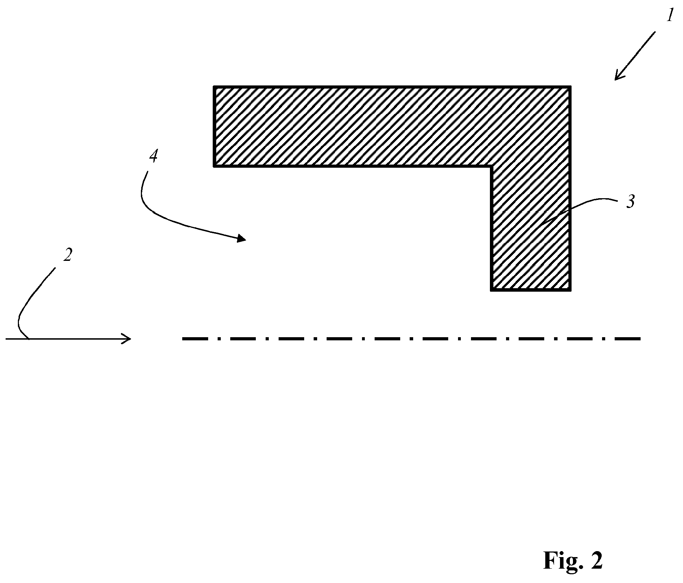

Figur 2 zeigt einen Axialquerschnitt durch das Aufnahmeteil 1.

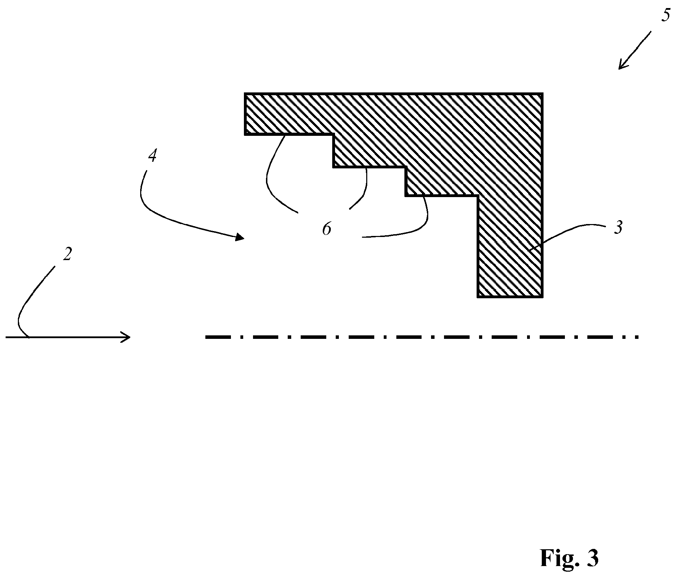

Figur 3 zeigt ein anderes Aufnahmeteil 5 eines im Übrigen der besseren Übersichtlichkeit halber nicht dargestellten Getriebegehäuses in einer Axialquerschnittdarstellung. Der Aufnahmeraum 4 des anderen Aufnahmeteils 5 ist abgestuft ausgebildet und weist mehrere konzentrische Stufen 6 mit in Einpressrichtung 2 abnehmenden Innendurchmesser auf. Das andere Aufnahmeteil 5 ist dazu ausgebildet, ein Hohlrad mit mehreren umlaufenden Vorsprüngen aufzunehmen, deren Außendurchmesser in Einpressrichtung ebenfalls abnimmt. Auch das andere Aufnahmeteil 5 weist einen Axialanschlag 3 auf.

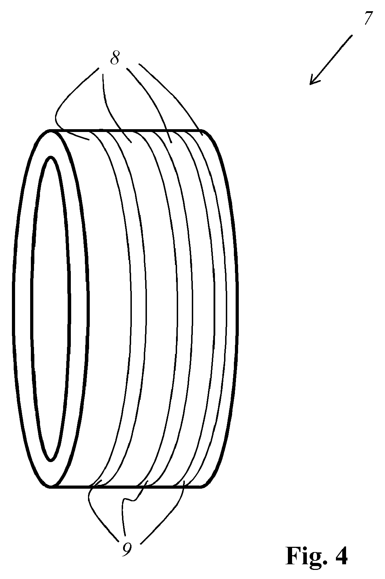

Figur 4 zeigt schematisch ein erstes Ausführungsbeispiel eines einzupressenden Hohlrades 7. Das Hohlrad 7 ist rotationssymmetrisch ausgebildet und weist mehrere in Tangentialrichtung umlaufende Vorsprünge 8 auf. Zwischen den umlaufenden Vorsprüngen 8 sind umlaufende Nuten 9 angeordnet. Auf der Innenseite weist das Hohlrad 7 eine in dieser Figur nicht dargestellte Innenverzahnung auf.

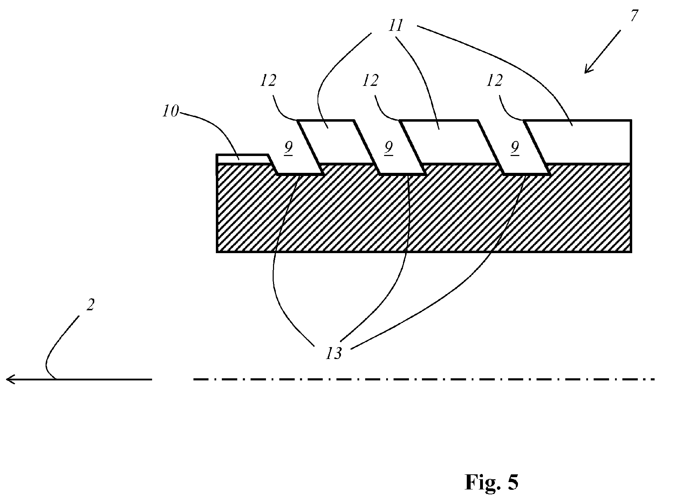

Figur 5 zeigt schematisch in einer Axialquerschnittdarstellung ein zweites Ausführungsbeispiel eines einzupressenden Hohlrades 7. Auch dieses Hohlrad ist rotationssymmetrisch ausgebildet und weist einen ersten umlaufenden Vorsprung 10 und mehrere weitere umlaufende Vorsprünge 11 auf. Das Hohlrad 7 ist dazu ausgebildet, in Einpressrichtung 2 mit dem ersten umlaufenden Vorsprung voran in ein Getriebegehäuse eingepresst zu werden. Der erste umlaufende Vorsprung 10 weist keine Schneidkante auf, während die zweiten umlaufenden Vorsprünge 11 jeweils eine in Einpressrichtung 2 gerichtete Schneidkante 12 aufweisen. Die Schneidkanten weisen einen Schneidwinkel auf, der kleiner als 90 Grad ist. Zwischen den umlaufenden Vorsprüngen 10, 11 befinden sich Nuten 9, die schräg, also mit einer von 90 Grad verschiedenen Vorschubrichtung zur Mittelachse des Hohlrades 7 in die Außenumfangsseite des Hohlrades 7 gedreht wurden. Bei diesem Ausführungsbeispiel befinden sich die Böden 13 der Nuten 9 radial alle auf derselben Höhe.

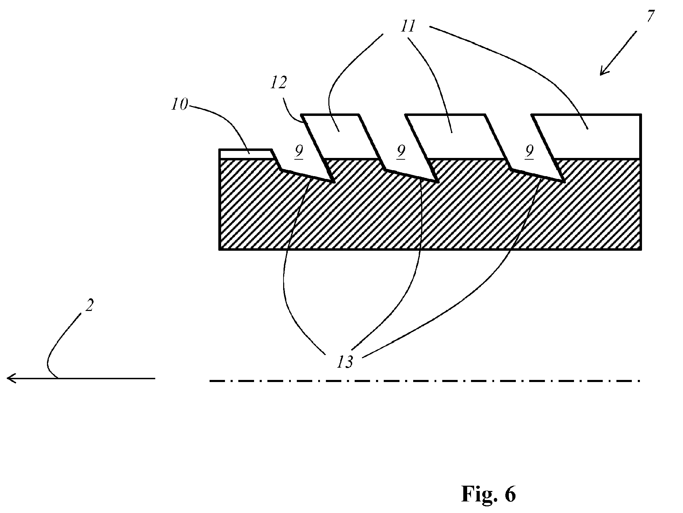

Figur 6 zeigt ein drittes Ausführungsbeispiel eines einzupressenden Hohlrades 7, das sich von dem in Figur 5 gezeigten Ausführungsbeispiel dadurch unterscheidet, dass die Böden der Nuten 13 der Nuten 9 relativ zur Mittelachse geneigt sind. Insbesondere kann (anders als bei dem in Figur 6 dargestellten Ausführungsbeispiel) jeweils der Boden einer Nut senkrecht zu deren Wänden ausgerichtet sein, was die Verwendung eines Drehwerkzeugs mit einer senkrecht zur Vortriebsrichtung geschliffenen Schneide erlaubt. Dies auch dann, wenn die Nuten schräg, also mit einer von 90 Grad verschiedenen Vorschubrichtung zur Mittelachse des Hohlrades 7 in die Außenumfangsseite des Hohlrades 7 gedreht wurden.
   Die in den Figuren 4 und 5 gezeigten Ausführungsbeispiele des Hohlrings 7 sind in der Weise ausgeführt, dass die umlaufenden Vorsprünge 8, 10, 11 gezahnt sind. Die Nuten 9 sind bei diesen Ausführungsbeispielen von außen über den Zahnfußdurchmesser hinaus in das Hohlrad 7 gedreht. Dies hat den besonderen Vorteil, dass die Nuten im Bereich ihres Nutbodens besonders gut die mittels der Schneidkanten 12 vom Getriebegehäuse abgetrennte Späne aufnehmen kann.

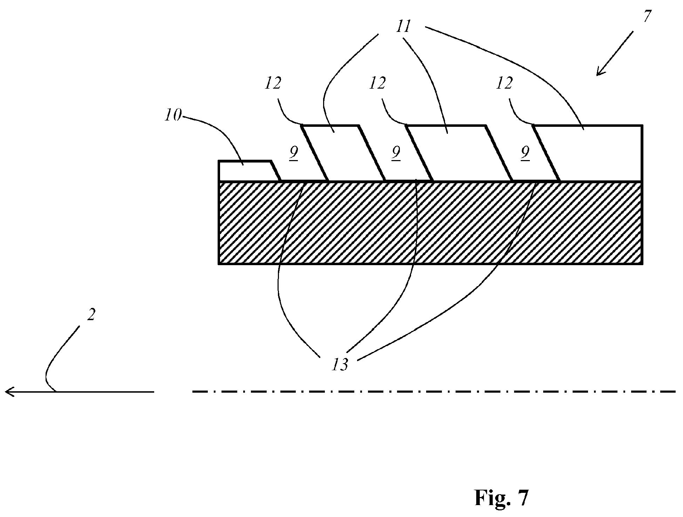

Figur 7 zeigt ein viertes Ausführungsbeispiel eines einzupressenden Hohlrades, das im Wesentlichen dem in Figur 6 gezeigten dritten Ausführungsbeispiel entspricht, wobei jedoch die Nuten 9 bis lediglich bis auf Höhe der Zahnfußdurchmesser gedreht sind.

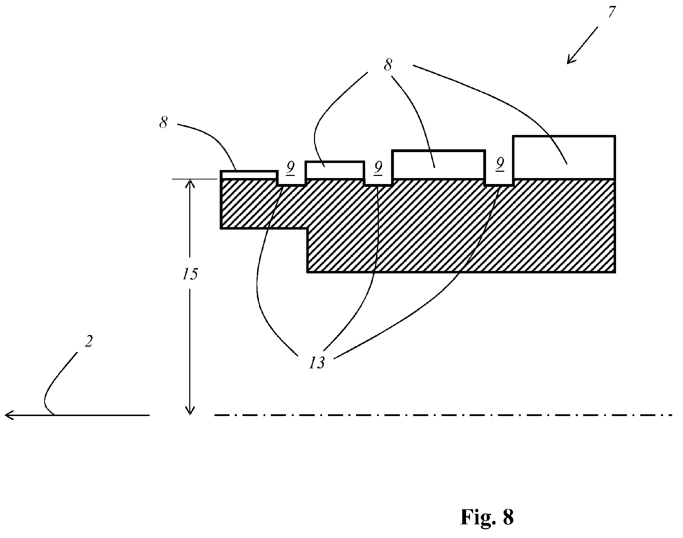

Figur 8 zeigt ein fünftes Ausführungsbeispiel eines einzupressenden Hohlrades 7 bei dem die Nuten 9 in radialer Richtung über den Fußkreisdurchmesser 15 der Verzahnung der umlaufenden Vorsprünge 8 hinaus gedreht sind. Darüber hinaus weisen bei diesem Ausführungsbeispiel die gezahnten, umlaufenden Vorsprünge 8 einen in Einpressrichtung 2 abnehmenden Außendurchmesser auf.

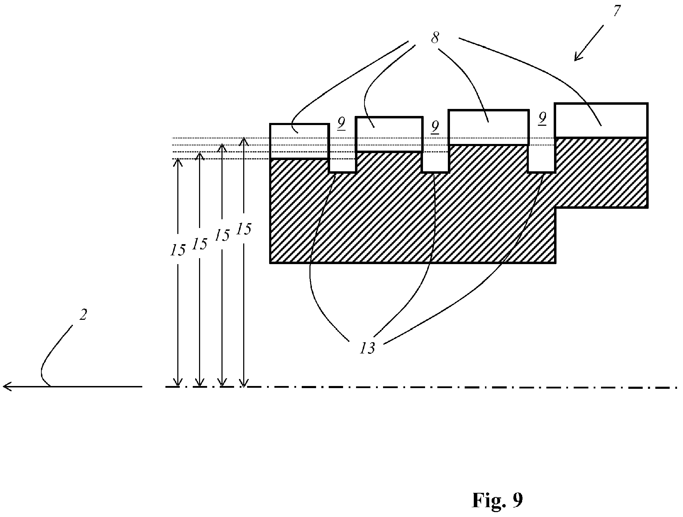

Figur 9 zeigt ein sechstes Ausführungsbeispiel eines einzupressenden Hohlrades, bei dem die Außendurchmesser der gezahnten, umlaufenden Vorsprünge 8 einen in Einpressrichtung abnehmenden Außendurchmesser aufweisen. Darüber hinaus weisen die gezahnten Vorsprünge 8 einen in Einpressrichtung 2 abnehmenden Fußkreisdurchmesser 15 auf.

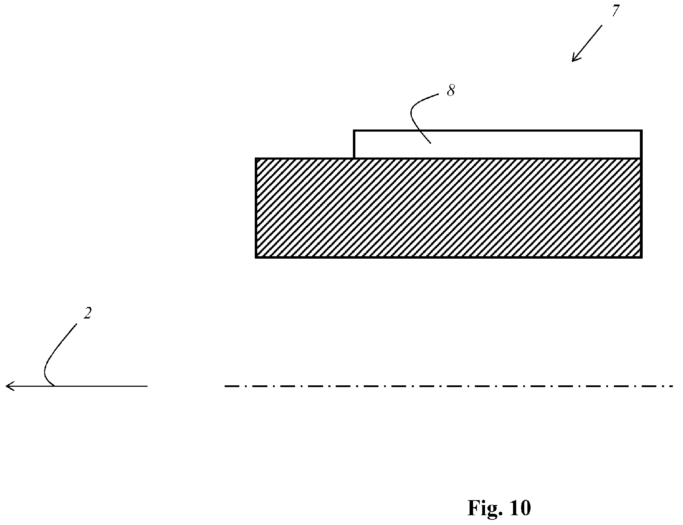

Figur 10 zeigt ein siebtes Ausführungsbeispiel eines einzupressenden Hohlrades 7, das einen einzigen breiten und gezahnten umlaufenden Vorsprung 8 aufweist.

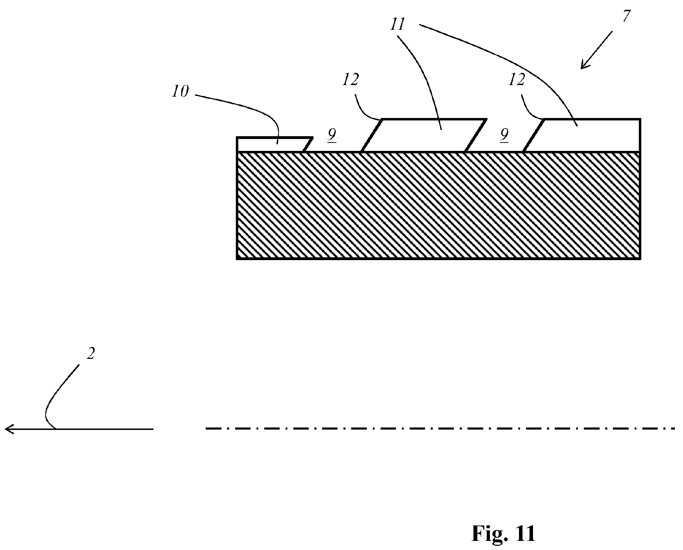

Figur 11 zeigt ein achtes Ausführungsbeispiel eines einzupressenden Hohlrades 7, bei dem die Nuten 9 derart schräg in die Außenumfangsseite des Hohlrades 7 eingedreht ist, dass die Schneidkanten 12 der zweiten umlaufenden Vorsprünge 11 einen Schneidwinkel von größer 90 Grad aufweisen.

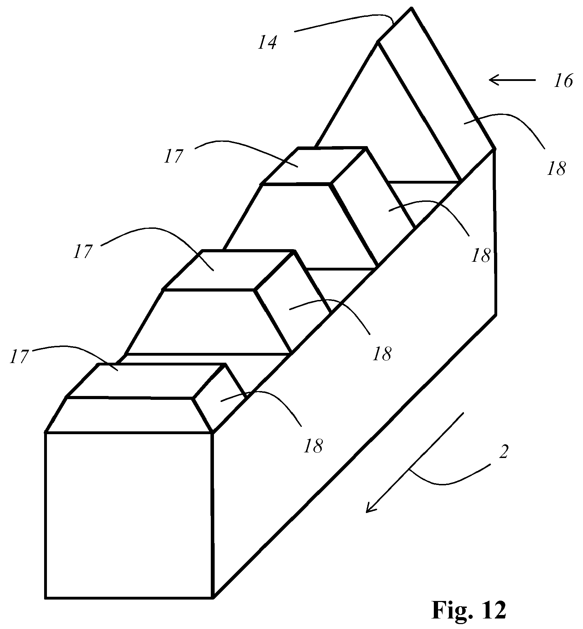

Figur 12 zeigt schematisch ein Ausschnittsegment aus einem neunten Ausführungsbeispiel eines einzupressenden Hohlrades. Bei diesem Ausführungsbeispiel weisen die einzelnen umlaufenden Vorsprünge einen in Einpressrichtung 2 abnehmenden Außendurchmesser auf, wobei die Zähne 16 des Vorsprungs mit dem größten Außendurchmesser eine in Axialrichtung verlaufende Scheitelkante 14 aufweisen, während die Zahnköpfe 17 der übrigen umlaufenden Vorsprünge abgeflacht sind.

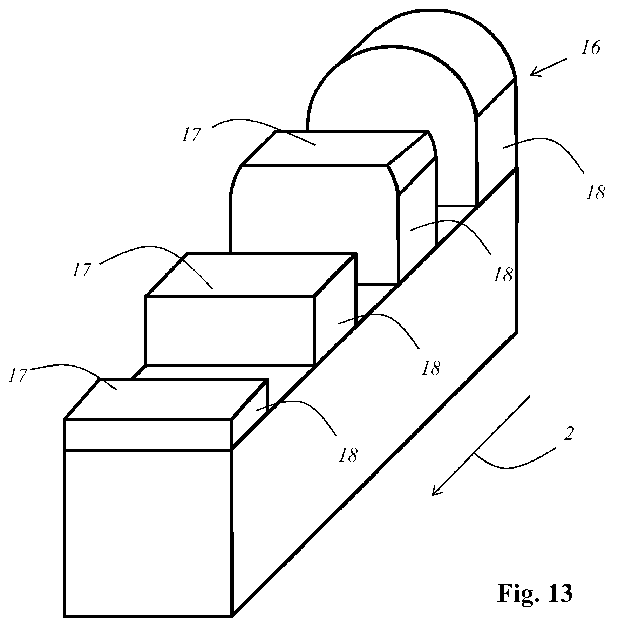

Figur 13 zeigt einen Ausschnitt aus einem zehnten Ausführungsbeispiel eines einzupressenden Hohlrades. Auch bei diesem Ausführungsbeispiel weisen die umlaufenden Vorsprünge einen in Einpressrichtung 2 abnehmenden Außendurchmesser auf. Die Zähne 16 des umlaufenden Vorsprungs mit dem größten Außendurchmesser sind gerundet, während die Zahnköpfe 17 der übrigen umlaufenden Vorsprünge abgeflacht sind. Darüber hinaus verlaufen die Zahnflanken weitgehend in Radialrichtung, während bei dem in Figur 12 gezeigten neunten Ausführungsbeispiel die Zahnflanken 18 angeschrägt sind.

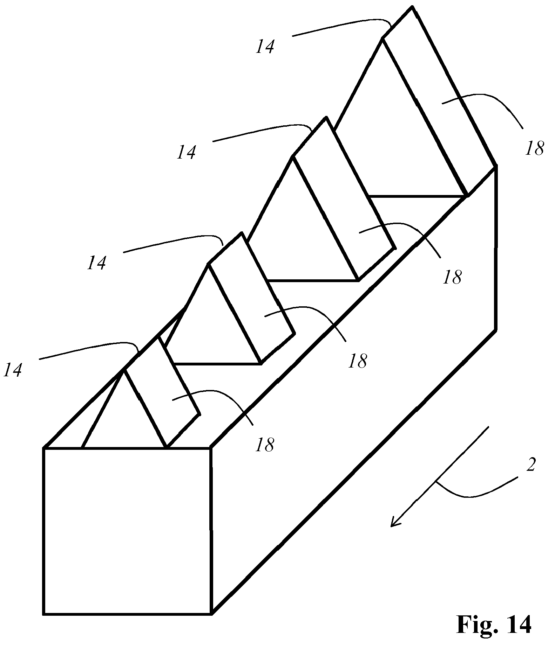

Figur 14 zeigt einen Detailausschnitt aus einem elften Ausführungsbeispiel eines einzupressenden Hohlrades. Auch bei diesem Ausführungsbeispiel weisen die umlaufenden, gezahnten Vorsprünge einen in Einpressrichtung 2 abnehmenden Außendurchmesser auf. Sämtliche Zähne der umlaufenden Vorsprünge weisen schräge Zahnflanken 18, sowie jeweils eine in Axialrichtung verlaufende Scheitelkante 14 auf.

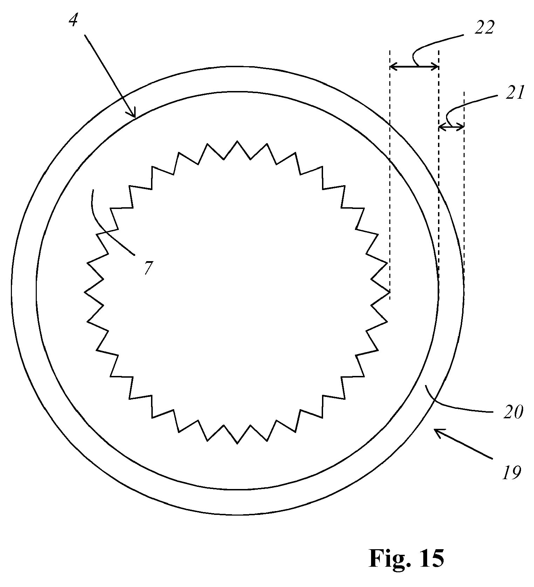

Figur 15 zeigt eine Schnittdarstellung entlang der Querschnittsebene (entspricht der Zeichenebene) durch den Aufnahmebereich 4 bezüglich eines zwölften Ausführungsbeispiels eines erfindungsgemäßen Spannungswellengetriebes, wobei der besseren Übersichtlichkeit halber lediglich das Getriebegehäuse 19 und das Hohlrad 7 eingezeichnet sind, während die übrigen Komponenten des Spannungswellengetriebes nicht dargestellt sind. Es ist zu erkennen, dass die radiale Abmessung 20 der Getriebegehäusewandung 20 kleiner ist, als die Kranzhöhe 22 des Hohlrades 7. In besonders vorteilhafter Weise kann das Getriebegehäuse 19 aus Aluminum oder einer Aluminiumlegierung bestehen, während das Hohlrad 7 aus Stahl besteht. Durch die besonderen Abmessungen und auch zusätzlich durch die besondere Materialauswahl wird vorteilhaft eine hinsichtlich der Außenabmessungen kompakte und bauraumsparende Bauform erreicht, während dennoch ein vergleichsweise großes Drehmoment übertragbar ist.

### Bezugszeichenliste:

- 1: Aufnahmeteil
- 2: Einpressrichtung
- 3: Axialanschlag
- 4: Aufnahmeraum
- 5: Weiteres Aufnahmeteil
- 6: Konzentrische Stufen
- 7: Hohlrad
- 8: Umlaufende Vorsprünge
- 9: Nut
- 10: Erster umlaufender Vorsprung
- 11: Weiterer umlaufender Vorsprung
- 12: Schneidkante
- 13: Boden der Nut 9
- 14: Scheitelkante
- 15: Fußkreisdurchmesser
- 16: Zähne
- 17: Zahnköpfe
- 18: Zahnflanke
- 19: Getriebegehäuse
- 20: Getriebegehäusewandung
- 21: radiale Abmessung der Getriebegehäusewandung
- 22: Kranzhöhe des Hohlrades 7

## Patentansprüche

1. Verfahren zum Herstellen eines Spannungswellengetriebes, **gekennzeichnet durch** folgende Schritte:
a. Einpressen eines innenverzahnten Hohlrades in axialer Richtung in ein Getriebegehäuse, derart, dass das innenverzahnte Hohlrad in einem Aufnahmebereich für das Hohlrad drehfest in dem Getriebegehäuse gehalten ist, wobei in einer Querschnittsebene **durch** den Aufnahmebereich die radiale Abmessung der Getriebegehäusewandung kleiner ist, als die Kranzhöhe des Hohlrades.
b. Einbauen eines Wellengenerators und eines außenverzahnten Flexsplines derart, dass die Innenverzahnung des Hohlrades mit der Außenverzahnung des Flexsplines in Eingriff steht.

2. Verfahren nach Anspruch 1, **dadurch gekennzeichnet, dass**
a. vor dem Einpressen auf der Außenumfangsseite des Hohlrades wenigstens ein tangential umlaufender Vorsprung erzeugt wird und/oder dass
b. vor dem Einpressen auf der Außenumfangsseite des Hohlrades mehrere tangential umlaufende, axial voneinander beabstandete Vorsprünge erzeugt werden, und/oder dass
c. vor dem Einpressen auf der Außenumfangsseite des Hohlrades mehrere tangential umlaufende Vorsprünge mit in Einpressrichtung abnehmenden Außendurchmessern erzeugt werden.

3. Verfahren nach Anspruch 2, **dadurch gekennzeichnet, dass**
a. wenigstens ein umlaufender Vorsprung eine in Einpressrichtung ausgerichtete Schneidkante aufweist und/oder dass
b. alle umlaufenden Vorsprünge jeweils eine in Einpressrichtung ausgerichtete Schneidkante aufweisen, und/oder dass
c. mehrere umlaufende Vorsprünge mit in Einpressrichtung abnehmenden Außendurchmessern erzeugt werden, von denen, insbesondere ausschließlich, der Vorsprung mit dem größten Außendurchmesser eine in Einpressrichtung ausgerichtete Schneidkante aufweist, und/oder dass
d. wenigstens ein umlaufender Vorsprung eine in Einpressrichtung ausgerichtete Schneidkante aufweist, die Schneidkante einen Schneidwinkel aufweist, der kleiner als 90 Grad ist.

4. Verfahren nach Anspruch 2 oder 3, **dadurch gekennzeichnet, dass**
a. in wenigsten einen umlaufenden Vorsprung axial verlaufende Kerben eingearbeitet werden und/oder dass
b. in wenigsten einen umlaufenden Vorsprung durch Fräsen oder durch Stoßen oder durch Wälzschälen axial verlaufende Kerben eingearbeitet werden und/oder dass
c. wenigstens ein umlaufender Vorsprung derart erzeugt wird, dass er eine Vielzahl von Zähnen, insbesondere spitze Zähnen, aufweist, und/oder dass
d. wenigstens ein umlaufender Vorsprung derart erzeugt wird, dass er eine Vielzahl Zähnen aufweist, wobei jeder Zahn eine sich über die Zahnbreite verändernde Zahnhöhe aufweist, und/oder dass
e. wenigstens ein umlaufender Vorsprung derart erzeugt wird, dass er eine Vielzahl von Zähnen aufweist, wobei jeder Zahn einen sich über die Zahnbreite verändernden Fußkreisdurchmesser aufweist, und/oder dass
f. mehrere umlaufende Vorsprünge mit in Einpressrichtung abnehmenden Außendurchmessern erzeugt werden, von denen, insbesondere ausschließlich, der Vorsprung mit dem größten Außendurchmesser eine Vielzahl von Zähnen, insbesondere spitze Zähnen, aufweist.

5. Verfahren nach einem der Ansprüche 1 bis 4, **dadurch gekennzeichnet, dass**
a. vor dem Einpressen in der Außenumfangsseite des Hohlrades wenigstens eine tangential umlaufende Nut erzeugt wird und/oder dass
b. vor dem Einpressen in der Außenumfangsseite des Hohlrades wenigstens eine tangential umlaufende Nut durch ein Drehverfahren erzeugt wird und/oder dass
c. vor dem Einpressen in der Außenumfangsseite des Hohlrades mehrere tangential umlaufende Nuten erzeugt werden, und/oder dass
d. vor dem Einpressen in der Außenumfangsseite des Hohlrades wenigstens eine tangential umlaufende Nut erzeugt wird, wobei die Nut derart angeordnet wird, dass sie beim Einpressen vom Getriebegehäuse abgetrennte Späne automatisch aufnimmt, und/oder dass
e. vor dem Einpressen in der Außenumfangsseite des Hohlrades wenigstens eine tangential umlaufende Nut erzeugt wird, wobei die Nut derart angeordnet wird, dass sie beim Einpressen Späne aufnimmt, die mittels der Schneidkante eines der Nut benachbarten umlaufenden Vorsprungs vom Getriebegehäuse abgetrennt wurden.

6. Spannungswellengetriebe mit einem Wellengenerator, einem außenverzahnten Flexspline und einem innenverzahnten Hohlrad, dessen Innenverzahnung mit der Außenverzahnung des Flexsplines in Eingriff steht, und mit einem Getriebegehäuse, **dadurch gekennzeichnet, dass** das innenverzahnte Hohlrad in einem Aufnahmebereich für das Hohlrad in das Getriebegehäuse eingepresst und dadurch relativ zum Getriebegehäuse drehfest gehalten ist, wobei in einer Querschnittsebene durch den Aufnahmebereich die radiale Abmessung der Getriebegehäusewandung kleiner ist, als die Kranzhöhe des Hohlrades.

7. Spannungswellengetriebe nach Anspruch 7, **dadurch gekennzeichnet, dass**
a. die Außenumfangsseite des Hohlrades wenigstens einen tangential umlaufenden Vorsprung aufweist und/oder dass
b. die Außenumfangsseite des Hohlrades mehrere tangential umlaufende, axial voneinander beabstandete Vorsprünge aufweist, und/oder dass
c. die Außenumfangsseite des Hohlrades mehrere tangential umlaufende Vorsprünge mit in Einpressrichtung abnehmenden Außendurchmessern aufweist.

8. Spannungswellengetriebe nach Anspruch 7, **dadurch gekennzeichnet, dass**
a. wenigstens ein umlaufender Vorsprung eine in Einpressrichtung ausgerichtete Schneidkante aufweist und/oder dass
b. alle umlaufenden Vorsprünge jeweils eine in Einpressrichtung ausgerichtete Schneidkante aufweisen, und/oder dass
c. mehrere umlaufende Vorsprünge mit in Einpressrichtung abnehmenden Außendurchmessern erzeugt werden, von denen, insbesondere ausschließlich, der Vorsprung mit dem größten Außendurchmesser eine in Einpressrichtung ausgerichtete Schneidkante aufweist, und/oder dass
d. wenigstens ein umlaufender Vorsprung eine in Einpressrichtung ausgerichtete Schneidkante aufweist, die einen Schneidwinkel aufweist, der kleiner als 90 Grad ist.

9. Spannungswellengetriebe nach einem der Ansprüche 6 bis 8, **dadurch gekennzeichnet, dass**
a. in wenigsten einen umlaufenden Vorsprung axial verlaufende Kerben eingearbeitet ist und/oder dass
b. wenigstens ein umlaufender Vorsprung eine Vielzahl von Zähnen, insbesondere spitze Zähnen, aufweist, und/oder dass
c. wenigstens ein umlaufender Vorsprung derart erzeugt wird, dass er eine Vielzahl von Zähnen aufweist, wobei jeder Zahn eine sich über die Zahnbreite verändernde Zahnhöhe aufweist, und/oder dass
d. wenigstens ein umlaufender Vorsprung derart erzeugt wird, dass er eine Vielzahl von Zähnen aufweist, wobei jeder Zahn einen sich über die Zahnbreite verändernden Fußkreisdurchmesser aufweist, und/oder dass
e. mehrere umlaufende Vorsprünge mit in Einpressrichtung abnehmenden Außendurchmessern vorhanden sind, von denen, insbesondere ausschließlich, der Vorsprung mit dem größten Außendurchmesser eine Vielzahl von Zähnen, insbesondere spitzen Zähnen, aufweist.

10. Spannungswellengetriebe nach einem der Ansprüche 6 bis 9, **dadurch gekennzeichnet, dass**
a. in der Außenumfangsseite des Hohlrades wenigstens eine tangential umlaufende Nut vorhanden ist und/oder dass
b. in der Außenumfangsseite des Hohlrades mehrere tangential umlaufende Nuten vorhanden sind, und/oder dass
c. in der Außenumfangsseite des Hohlrades wenigstens eine tangential umlaufende Nut vorhanden ist, wobei die Nut derart angeordnet ist, dass sie beim Einpressen vom Getriebegehäuse abgetrennte Späne automatisch aufnimmt, und/oder dass
d. in der Außenumfangsseite des Hohlrades wenigstens eine tangential umlaufende Nut vorhanden ist, wobei die Nut derart angeordnet ist, dass sie beim Einpressen Späne aufnimmt, die mittels der Schneidkante eines der Nut benachbarten umlaufenden Vorsprungs vom Getriebegehäuse abgetrennt wurden.

11. Aktuator, insbesondere Fahrwerksaktuator, beinhaltend einen Antriebsmotor und ein Spannungswellengetriebe nach einem der Ansprüche 6 bis 10 oder Aktuator, insbesondere Fahrwerksaktuator, der mittels eines Zugmitteltriebs oder eines Riementriebs an das Spannungswellengetriebe angekoppelt ist.

12. Tragstruktur, in die ein Spannungswellengetriebe nach einem der Ansprüche 6 bis 10 und/oder ein Aktuator nach Anspruch 11 eingebaut sind oder die ein Spannungswellengetriebe nach einem der Ansprüche 6 bis 10 und/oder ein Aktuator nach Anspruch 11 aufweist.

13. Tragstruktur nach Anspruch 12, **dadurch gekennzeichnet, dass**
a. die Tragstruktur eine Fahrzeugkomponente bildet oder als Teil einer Fahrzeugkomponente ausgebildet ist und/oder dass
b. die Tragstruktur als Teil eines Fahrwerks ausgebildet ist und/oder dass
c. die Tragstruktur als Teil eines aktiven Fahrwerks ausgebildet ist und/oder dass
d. die Tragstruktur als Teil eines radselektiven, aktiven Fahrwerks, ausgebildet ist und/oder dass
e. die Tragstruktur als Teil einer Fahrzeugachse ausgebildet ist und/oder dass
f. die Tragstruktur als Teil einer Kraftfahrzeug-Fahrzeugachse ausgebildet ist, und/oder dass
g. die Tragstruktur als Quertraverse ausgebildet ist, und/oder dass
h. die Tragstruktur eine Quertraverse aufweist, die das Getriebegehäuse oder wenigstens einen Teil des Getriebegehäuses bildet, und/oder dass
i. die Tragstruktur eine Quertraverse aufweist, die wenigstens im Aufnahmebereich für das Hohlrad das Getriebegehäuse oder wenigstens einen Teil des Getriebegehäuses bildet.

14. Fahrwerk, insbesondere aktives Fahrwerk für ein Kraftfahrzeug, das ein Spannungswellengetriebe nach einem der Ansprüche 6 bis 10 und/oder einen Aktuator nach Anspruch 11 und/oder eine Tragstruktur nach Anspruch 12 oder 13 aufweist.

15. Kraftfahrzeug beinhaltend ein Spannungswellengetriebe nach einem der Ansprüche 6 bis 10 und/oder einen Aktuator nach Anspruch 11 und/oder eine Tragstruktur nach Anspruch 12 oder 13 und/oder ein Fahrwerk nach Anspruch 14.
